# EUROPEAN PATENT APPLICATION

(11) **EP 1 806 693 A1**
(43) Date of publication of application: **11.07.2007**
(21) Application number: 06022775.8
(22) Date of filing: 02.11.2006
(51) Int. Cl.: G06Q 30/00

(54) **Personalized programming and advertising for television over IP**

(30) Priority: 30.11.2005 US 290332
(71) Applicant: Alcatel Lucent, 75008 Paris (FR)
(72) Inventor: Rao, Kashipati, G., TX 75025 Plano (US); He, Jiang, TX 75074 Plano (US)
(74) Representative: Schäfer, Wolfgang

(57) **Abstract**

A media programming source, such as an IP television or radio station, comprises a presence server for collecting and storing information regarding the identification of a set of one or more audience members currently interacting with a particular media device. A database stores information about a plurality of potential audience members. Control circuitry sends advertisements to the particular media device based on the identification of the set of audience members and information associated with the audience members. Additionally, a programming menu for the media programming source can be optimized for a particular audience based on the audience preferences.

## Description

### Cross-Reference To Related Applications

Not Applicable

### Statement of Federally Sponsored Research or Development

Not Applicable

### Background of the Invention

### 1. TECHNICAL FIELD

This invention relates in general to television and, more particularly, to a method and apparatus for providing personalized programming and advertising.

### 2. DESCRIPTION OF THE RELATED ART

Television is the main source of entertainment for most of the world. Television programming also accounts for a large portion of money invested in advertising, and is a major source of information directed to consumers. While over-the-air broadcast television remains the most popular transmission medium, cable and satellite are gaining popularity. Cable and satellite systems typically provide hundreds of channels, although a particular viewer may not receive all available channels.

A newcomer to television programming is the IP television. An IP television sends programming signals in packets over the Internet, or other network, to a computer or other device capable of communicating over the network, such as a mobile phone or mobile computing device such as a personal digital assistant (PDA). An advantage of IP television is that the cabling, typically telephone wires, fiber, or wireless infrastructure, is already in place for network communications, such as the Internet. IP television differs from cable or satellite television in that multiple channels are not being broadcast to the receiving device; instead, each receiving device is programmed to select an available channel. Like cable or satellite, an IP television may select from hundreds of available live broadcasts. IP television has the advantage, however, that it is ideally suited for on-demand programming, which allows a user to select from a catalog of previously recorded programs, without being restricted to a set broadcast time.

Advertising on television is generally allocated using statistical demographic studies to determine which programs provide the most likely customers. For example, if a particular program is found to draw a large number of viewers in the 20-35 age range, companies with products that are applicable to that age range, such as automobile manufacturers, are generally willing to pay more money to advertise on that program. In most cases, programs are directed to wide demographic range, and any advertisement will necessarily be broadcast to large numbers of viewers who are not in the targeted group.

A recent development in television viewing is the DVR (digital video recorder). A DVR records programs on a hard drive and skipping commercials can be greatly simplified. Accordingly, advertisements are often skipped in their entirety by viewers. However, "pop-up" advertisements, which are shown to the views as a commercial skip is being performed, are expected in the future.

The large number of programming choices currently available with cable, satellite or IP television has had two distinct consequences. First, choosing between hundreds of programs is overwhelming, and many desirable programs are missed. Second, with the audience spread out over hundreds of channels, the value received for a given advertisement has been greatly diminished.

Therefore, a need has arisen for a more effective manner of presenting programming and delivering advertisements to a viewer.

### Brief Summary of the Invention

In the present invention, a media programming source comprises a presence server for collecting and storing information regarding the identification of a set of one or more audience members currently interacting with a particular media device. A database stores information about a plurality of potential audience members. Control circuitry sends advertisements to the particular media device based on the identification of the set of audience members and information associated with the audience members.

The present invention provides significant advantages over the prior art. First, advertisers can direct their advertisements to people that are most interested in their product or services. Second, audience members are less likely to skip or ignore commercials, since the commercials are more likely to involve matters of personal interest. Third, the programming provider can maximize revenues by matching advertisements to interested audience members.

In a second aspect of the invention, programming menus are generated with respect to the set of audience members, such that the programming choices are prioritized based on audience preferences.

This aspect of the invention improves the user interface from the viewpoint of the audience members.

### Brief Description of the Several Views of the Drawings

For a more complete understanding of the present invention, and the advantages thereof, reference is now made to the following descriptions taken in conjunction with the accompanying drawings, in which:

Figure 1 illustrates a block diagram of a media source, specifically, a television system 10, which provides for customized programming and advertising based on presence and context considerations;

Figure 2 illustrates a customized program schedule; and

Figure 3 illustrates an example of selecting a customized advertisement based on presence and context considerations.

### Detailed Description of the Invention

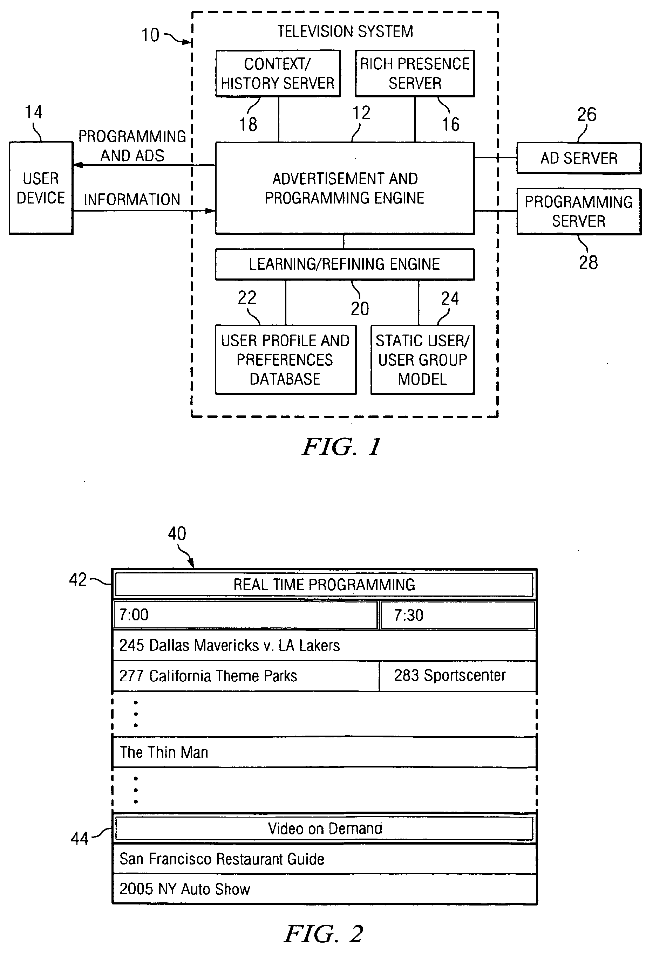

The present invention is best understood in relation to Figures 1 - 3 of the drawings, like numerals being used for like elements of the various drawings.

Figure 1 illustrates a block diagram of a television system 10 which significantly increases the ability to customize advertisements based on multiple audience factors and provides a superior programming experience for the audience.

An advertisement and programming engine 12 provides programming and inserted advertisements to a user device 14. The advertisement and programming engine 12 interfaces with a rich presence server 16, a context/history server 18, and a learning/refining engine 20 to pass through programming and advertising to the user device 14. Learning/refining engine 20 receives inputs through user profile and preferences database 22 and static user/user group model 24.

In the illustrated embodiment, it is assumed that the television system is an IP television system in which television programming and advertisement are sent to the user device over a network, such as the Internet, using multicast video streams or video on demand. In this embodiment, the user device 14 could be a computer or web appliance coupled to a display. However, as described below, the invention could be used on other television systems, such as satellite or cable, as described below.

In operation, information is provided to the advertisement and programming engine specifying all or part of the audience. This information could be specified in a number of ways, either implicitly, explicitly, or a combination of explicit and implicit information.

Explicit information sent to the advertisement and programming engine 12 could include information entered through a keyboard or a remote control, through other identification means, such as RFID (radio frequency identification) tags, or other devices. The information could include, for example:
Identification of one or more of the audience members, by name or other identifier;
Identification of a predefined group of people, such as a poker club;
Identification of basic personal information for audience members, such as age and gender;
Identification of the location of the user device 14, such as family room, master bedroom, and so on;
Identification of the type of user device, such as screen properties (size, resolution and color depth) and connection speed.

Based on this information, along with information stored or derived in the context/history server 18, rich presence server 16, user profile and preferences database 22 and static user/user group model 24, the advertisement and programming engine 12 provides programming choices and advertisements to the present group of one or more viewers.

The rich presence server 16 could perform just basic presence services, i.e., maintain information on the current group of viewers for a particular television. In the preferred embodiment, however, rich presence server 16 maintains additional information on the current group of viewers for a particular television, commonly known as "rich" presence. The communication of rich presence is well known in the art and is a rapidly expanding area in communication. Current proposals provide activity elements, class elements, mood elements, place-type elements, privacy elements, relationship elements, and user-input elements, among others. A brief description of the elements is given below, it being understood that additional informational types will be available in the future and could be easily integrated into the present embodiment of the invention.

Activity elements describe the general state of the user such as "away", "appointment", "busy", "holiday", "in transit", "meal", "meeting", "on-the-phone", "performance", "permanent absence", "sleeping", "steering", "travel", or "vacation". Many of these elements could be derived from a scheduling or program used by the user. While some of these specific activities do not have particular relevance to programming or advertising, others, such as "meal", could be particularly relevant.

The class element describes the class of a service, device or person. This information can be used to group similar services, devices or person. For example, "adult" or "football fan" could be used as a class element describing a person.

The mood element describes the mood of the user. This could entail any number of possible moods that might be relevant to both programming and advertising - for example: afraid, bored, cranky, depressed, happy, hungry, in love, moody, sleepy, thirsty, stressed.

The place-type element describes the place where the user is currently located, such as aircraft, airport, bus, car, home, hotel, library, mall, office, outdoors, public, public-transport, quiet, restaurant, school, station (bus, train), theater, and so on.

The privacy element indicates what types of communication (audio, video, text) third parties are unlikely to be able to intercept accidentally or intentionally.

The sphere element designates the current state and role that a user plays. For example, a sphere element might describe whether a person is at work or at home or at church and what function is being performed - such as scout leader, babysitting, etc.

A user-input element describes the user-input or usage state of the service or device, based on human user input, e.g., remote control, keyboard, pointing device or voice.

As stated above, the rich presence information is expected to expand with time. The elements set forth above are a subset of those described in "RPID: Rich Presence Extensions to the Presence Information Data Format (PDIF)", Internet Draft "draft-ietf-simple-rpid-04", dated October 25, 2004. It should be noted that the invention can be used in connection with any source of information available about a set of viewers and is not restricted to any particular implementation of presence; in general, better programming and advertising decisions will be made if there is more information about the viewers. Many elements may be interactively provided by the audience members, in particular the mood elements, in order to be taken into consideration by the advertisement and programming engine 12.

The context/history server 18 contains information regarding past or current events that could affect programming or advertising. For example, the context/history server could store information regarding the television programs selected by a user for the last six months and the advertisements seen by the user for the last six months. Other contextual information could also be monitored and evaluated by the context/history server 18. For example, information from a personal digital assistant or scheduling program, such as MICROSOFT OUTLOOK could be retrieved by the context/history server 18. This information could include: travel plans, purchasing history, the subject of recent calls and e-mail messages, Internet sites visited by the user, and so on. This information can be used to determine what programs a user might be interested in, or what products/services the user might be interested in learning about.

The user profile and preferences database 22 stores information on a user that may be helpful in choosing programming or advertising. This would include, for example, date of birth, sex, marital status, information on children (if any), hobbies and interests, favorite sports teams, political affiliations and so on.

The static user/user group model 24 includes default information for a user or specified group. For example, the static user/user group model 24 could include a favorite channel list for a user or a user group (such as a "family" channel list), times at which only family-oriented programming was allowed without parental consent, and so on. The information in the user profile and preferences data can include information entered by the user and information derived from past use.

The learning/refining engine 20 interfaces between the user profile and preferences database 22, the static user/user group model 24 and the advertising and programming engine 12. The learning/refining engine learns the preferences of the user from the user profile and preferences database 22 and the static user/user group model for evaluating what types of programs and advertisements are preferred by particular audience members or groups.

In operation, the advertisement and programming engine 12 coordinates information from the user device 14 with information from context/history server 18, rich presence server 16, user profile and preferences database 22 and static user/user group model 24 to control the flow of advertisements and programming information to a group of one or more viewers.

As a first example, the following scenario is used: a single male user on an IP television is an airport at 7 PM when he accesses the program guide on his IP television on a mobile phone or mobile computing device. From his scheduling program, the context/history server 18 determines that he is on a business trip to San Francisco and his plane leaves at 7:45 PM. From emails and web browser history, the context/history server 18 also determines that he has been looking for a new car. From the user profile and preferences database 22, it can be determined that he is a Dallas Mavericks fan and enjoys old movies.

Figure 2 illustrates a programming guide 40 that could be generated from the information known to the television system 10. The programming guide includes live television under the "real time programming" heading 42 and recorded programs which can be viewed at any time under a "video on demand" heading 44. A Dallas Mavericks basketball game starting at 7PM is placed at the top of the list, because it is a one-time broadcast (as opposed to other recorded programming that may be repeated at multiple times). A travel show on "California Theme Parks" is also placed towards the top of the list, because of the upcoming travel to California. An old movie "The Thin Man", is placed lower in the list of real time programming, because it cannot be seen in its entirety prior to takeoff (of course, if continued communication with the IP user device 14 was available on the airplane, it could be placed at a higher position in the list).

Under the "video on demand" heading 44, the "San Francisco Restaurant Guide" and the "2005 NY Auto Show" are prominently displayed because of their relevance to the upcoming trip and the interest in purchasing a new car.

It should be understood that in an actual embodiment, a much lengthier list is likely to have been generated. Also, it is likely that the user would also have access to predetermined lists of favorite channels, and a full programming list sorted by channel number.

The advertisement and programming engine 12 uses artificial intelligence to determine which programs are most likely to be desirable to the user or users. Many factors can be used in the decision making process. For example, if some of the set of viewers are minors, the list might not include adult-oriented programming, such as R-rated movies, even though a particular R-rated movie may be highly ranked for a majority of the viewers. Similarly, adult-oriented programming may not be listed, or may be listed at a position of less prominence, if the viewer is in a public place where it is likely the programming could be seen by others. This would be true, for example, if the viewer were on a bus or train. The viewer would still be able to access the programming, if desired; it simply would not have a high ranking in situations where it is not likely to be viewed.

Many types of elements could be used to customize programming. In a simple system, programming choices could be made simply on the demographic information, such as age and sex, and preferences of the audience members detected by the presence server 16. In a more complicated system, stated preferences and moods could also be taken into account. A much more complex system would involve using context and history information derived transparently (although with the consent of the audience member) to provide timely programming choices.

Customized advertising is similar to programming, with the addition that the advertising server 28 may provide rules for determining rates for each advertisement displayed. For example, a particular ad may pay the owner of the television system 10 different amounts based on who is viewing the advertisement. The advertisement and programming engine 12 uses this rate information, coupled with information from the rich presence server 16, context/history server 18, user profile and preferences database 22 and static user/user group model 24, to insert advertisements into the datastream of a particular user device 14. Since the ad insertion can be different for each user device in communication with the television system 10, the advertising revenue can be maximized on a device-by-device basis.

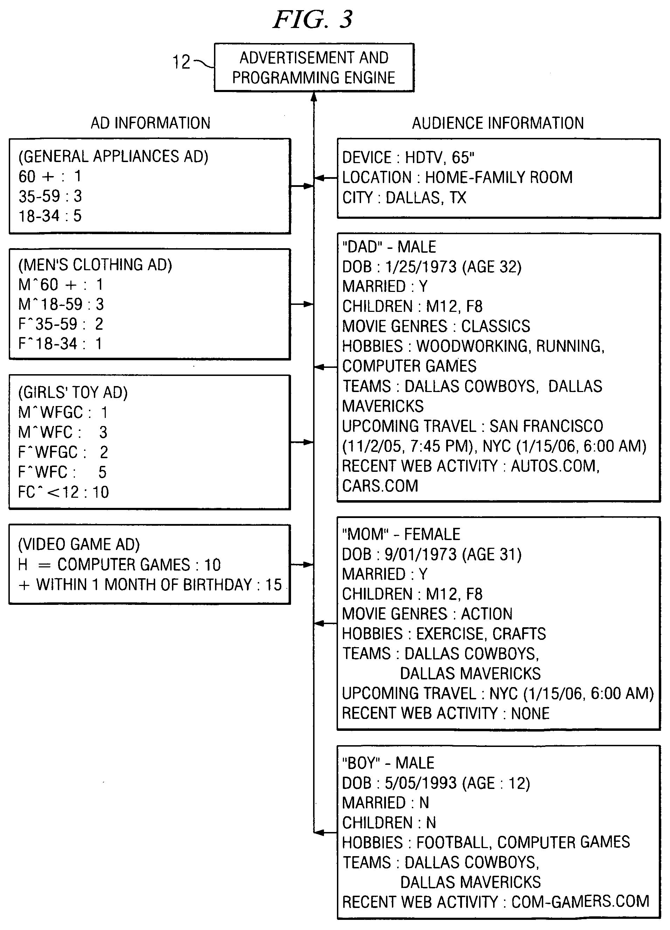

Figure 3 illustrates an example of information regarding the presence and context of an audience being processed by the advertising and programming engine 12 to generate ads for a particular audience watching a particular device 14. It is expected that an actual implementation would be capable of using many more fields on both the advertising criteria and the audience member profiles than is shown in Figure 3.

In Figure 3, each advertisement has associated criteria which can be compared with the presence/context information on each audience member. For example, a general appliances advertisement (such as a hardware or electronics store) assigns a value of "1" for each audience member who is sixty years old or older, a value of "3" for each audience member who is between the ages of thirty-five and fifty-nine, a value of "5" for each audience member who is between the ages of eighteen and thirty-four. Younger audience members are assigned a value of "0" by default.

The information from the device 14 indicates that the device is a HDTV (high definition television), located in the family room of a home in Dallas, Texas. At the present time (since the audience members can change dynamically), there are three audience members. The first audience member is listed as "Dad", a thirty-two year old married male, with a male child aged 12 and a female child aged 8. This audience member enjoys classic movies, and has listed woodworking, running and computer games as hobbies. The Dallas Cowboys and Dallas Mavericks are his favorite sports teams. From contextual information such as emails and scheduling programs, it has been determined that he will be traveling to San Francisco on November 2, 2005 and to New York City on January 15, 2006. Recent web activity indicates that he is in the market for a new car.

"Mom" is a thirty-one year old married female (with the same children). She likes action movies, along with the Dallas Cowboys and Dallas Mavericks. Her hobbies include exercise and crafts. She will also be traveling to New York City in January. There was no recent web activity indicating specific products for purchase.

"Boy" is a twelve year old male, who enjoys football and computer games. His favorite teams are the Dallas Cowboys and Dallas Mavericks and he recently accessed "com-gamers.com" (a computer gaming web site).

Again, the information for an audience member in an actual implementation is expected to be more comprehensive and detailed. Each audience member would preferably have a unique ID, so that his or her interests and needs could be evaluated at any site, not just a home venue. Further, most people would have significantly more personal information accessible by the advertisement and programming engine 12; a full rendering of possible information is not reasonable to illustrate in the Figures.

Applying the criteria from the General Appliances Ad to the actual audience members, the advertisement would receive five points for both Mom and Dad for a total of ten points.

The next advertisement, a Men's Clothing advertisement, more particularized criteria are provided. The criteria for this advertisement assigns a value of "1" for each male audience member who is sixty years old or older, a value of "3" for each male audience member who is between the ages of eighteen and fifty-nine, a value of "1" for each female audience member who is between the ages of eighteen and thirty-four, and a value of "2" for each female audience member between the ages of thirty-five and fifty-nine.

Applying these criteria from the Men's Clothing Ad to the actual audience members, the advertisement would receive three points for Dad and two points for mom, so it would be a less desirable choice than the General Appliances Ad.

The third advertisement, a Girl's Toy Ad allocates a value of "1" to each male with female grandchildren (M^FGC), a value of three for a male with female children (M^FC), a value of two to each female with female grandchildren (F^FGC), a value of five for a female with female children (F^FC), and a value of ten for each female child aged twelve or under. Accordingly, this advertisement would receive three points for Dad and five points for Mom for a total of eight points. It should be noted that while this advertisement has a lower score that the General Appliances Ad, it would have received a higher score if the daughter had been part of the present audience.

The last advertisement is a Video Game Ad. It scores a value of 10 each audience member that has computer gaming as a hobby. Also, the "+" indicates a bonus for a match if the matching party has a birthday in the upcoming month. In this case, the advertisement criteria would receive ten points for both Dad and Boy for a total of twenty. Of the advertisements shown in Figure 3, this advertisement would have the highest score.

In addition to assigning values to the presence/context information associated with each member or the audience, it would also be beneficial to scale or adjust the scores based on the previous viewing by the audience members. For example, a score for a particular person could be reduced by 50% if the advertisement had been seen by that person in the last two hours, by 30% if it had been seen more than twice in the last two days and by 15% if it had been seen more than five times in the last month.

Additionally, values associated with an advertisement could be scaled based on upcoming holidays or on personal data of audience members, such as birthdays, anniversaries, graduations, and so on. Values could also be scaled based on the currently playing program. For example, an advertisement for weight loss supplement may be more valuable during an exercise program than during a football game.

Using a scoring system, of the type described above, advertising time can be sold at a rate based on a correlation between the advertiser's criteria for desired recipients and the actual audience member's presence and context/history profiles.

The ability to customize advertising to particular audience members watching on a particular device 14 provides an improved delivery system for advertisements as part of audio-video programming. The improved advertising benefits all parties involved - the audience receives commercials that relate to personal interests, the advertisers spend their advertising dollars on the most desirable consumers, and the programming supplier can maximize revenues. It should be noted that the invention could also be used for audio-only programming to supply audio streams based on user presence and context/history.

For IP television, the transfer of data between the television system and the user device 14, ad server 26 and programming server 28 can be accomplished using general IP (Internet Protocol) communications. For cable television, information can also be passed using general IP communications for digital cable. Protocols for interactive television also exist for analog cable systems. For satellite, data can be transferred directly via satellite if the user has satellite communication capabilities, such as through the DIRECTWAY service, or through dial-up lines. Alternatively, with either satellite or cable systems, data transfer can take place through a separate IP communication backbone apart from the video communication link, such as through a communication device coupled to the Internet.

Also, since satellite and cable video programming is largely broadcast-only (i.e., the identical programming is simultaneously sent to a large number of receiving devices, as opposed to on-demand programming, which is sent to individual devices upon request), customized advertising insertion into the programming is a little more complex than IP television, where any advertisement could be inserted into the video stream at any time on an individualized basis. With broadcast programming, several approaches could be taken to insert advertisements based on presence/context information. One would be to limit the number of advertisements that could be inserted in any given situation, and broadcast these commercials over separate channels. Based on the presence/context information, the advertisement and programming engine 12 would select one of the simultaneously broadcast advertisements to insert into programming. A second approach more suitable for digital video recorders (DVRs) would be to store advertisements locally on the DVRs hard drive, and insert the previously recorded advertisements into the video stream based on commands from the advertisement and programming engine 12.

While the advertisement and programming engine 12 is shown as part of the television system 10, it could also reside on the device 14 and receive information from the television system 10 upon which to make programming and advertising choices.

The following features, separately or in any combination, may also constitute advantageous embodiments of the described or claimed invention:
- The claimed and/or described media programming source wherein the media device comprises a device for streaming audio files.
- The claimed and/or described media programming source further comprising a context history server for deriving information about the plurality of potential audience members from data files associated with the plurality of potential audience members.
- The claimed and/or described media programming source wherein said context history server extracts information from scheduling program data files.
- The claimed and/or described media programming source wherein said context history server extracts information from text associated with electronic communications.
- The claimed and/or described media programming source wherein said databases include preference information provided by the plurality of potential audience members.
- The claimed and/or described method wherein said retrieving step includes retrieving context information about the set of audience members, where said context information includes information gathered from external data files associated with the audience members.
- The claimed and/or described method wherein said retrieving step includes the step of retrieving personal preference information provided by the set of audience members.
- The claimed and/or described method wherein said media device receives programming over a network.

Although the Detailed Description of the invention has been directed to certain exemplary embodiments, various modifications of these embodiments, as well as alternative embodiments, will be suggested to those skilled in the art. The invention encompasses any modifications or alternative embodiments that fall within the scope of the Claims.

## Claims

1. A media programming source comprising:
a presence server for collecting and storing information regarding the identification of a set of one or more audience members currently interacting with a particular media device;
one or more databases for storing information about a plurality of potential audience members; and
control circuitry for sending advertisements to said particular media device based on the identification of the set of audience members and information associated with the audience members.

2. The media programming source of claim 1 wherein the media device comprises an IP television.

3. The media programming source of claim 1 wherein said presence server is a rich presence server.

4. The media programming source of claim 1 and further comprising a context server for deriving information about the plurality of potential audience members from external data files associated with the plurality of potential audience members.

5. The media programming source of claim 4 wherein said context server extracts information from a subject line of an electronic communication.

6. The media programming source of claim 4 wherein said context server extracts information from scheduling program data files.

7. The media programming source of claim 4 wherein said context server extracts information from emails.

8. The media programming source of claim 4 wherein said databases include preference information provided by the plurality of potential audience members.

9. A media programming source comprising:
a presence server for collecting and storing information regarding the identification of a set of one or more audience members currently interacting with a particular media device;
one or more databases for storing information about a plurality of potential audience members; and
control circuitry for generating programming menus based on said set of audience members.

10. The media programming source of claim 9 wherein the media device comprises an IP television.

11. The media programming source of claim 9 wherein said presence server is a rich presence server.

12. A method of generating advertisements from a media source, comprising the steps of:
collecting and storing information on a presence server regarding the identification of a set of one or more audience members currently interacting with a particular media device;
retrieving information about the set of audience members from one or more databases; and
sending advertisements to said particular media device based on the identification of the set of audience members and information associated with the audience members.
